# EUROPÄISCHE PATENTSCHRIFT

(11) **EP 3 676 509 B1**
(45) Veröffentlichungstag und Bekanntmachung des Hinweises auf die Patenterteilung: **21.04.2021**
(21) Anmeldenummer: 18755743.4
(22) Anmeldetag: 07.08.2018
(51) Int. Cl.: F16F 1/12

(54) **FEDERTELLER**
SPRING PLATE
COUPELLE DE RESSORT

(30) Priorität: 30.08.2017 DE 102017215131
(43) Veröffentlichungstag der Anmeldung: 08.07.2020
(73) Patentinhaber: ThyssenKrupp Bilstein GmbH, 58256 Ennepetal (DE); thyssenkrupp AG, 45143 Essen (DE)
(72) Erfinder: SCHMIDT, Klaus, 51519 Odenthal (DE); MAI, Andreas, 45549 Sprockhövel (DE)
(74) Vertreter: thyssenkrupp Intellectual Property GmbH
(86) Internationale Anmeldenummer: PCT/EP2018/071346
(87) Internationale Veröffentlichungsnummer: WO 2019/042717

(56) Entgegenhaltungen:
- EP-A2- 0 135 808
- DE-A1-102008 046 939
- DE-A1-102013 009 637

## Beschreibung

Die Erfindung betrifft einen Federteller zur Abstützung einer Fahrzeugtragfeder, wie er zum Beispiel bei Federbeinen für Kraftfahrzeuge eingesetzt wird.

Bei federtragenden Schwingungsdämpfern und McPherson-Federbeinen stützt sich die Aufbaufeder (Fahrzeugtragfeder) üblicherweise auf einem am Dämpferrohr befestigten Federteller ab. Die Fahrzeugtragfedern sind lackiert, um sie vor Korrosion zu schützen. Im Fahrbetrieb kommt es beim Ein- und Ausfedern zu Relativbewegungen zwischen der Feder und dem Federteller, die zu Beschädigungen der Lackschicht der Feder führen. Federn mit beschädigter Lackschicht sind korrosionsanfällig. Fahrzeugtragfedern sind im Bereich der Radaufhängung Schmutz und Feuchtigkeit ausgesetzt, was eine unerwünschte Korrosion begünstigt.

Um das Korrosionsrisiko zu senken wird in der DE 10 2005 021 765 A1 eine Lagerung für eine Fahrzeugfeder vorgeschlagen, die einen Federteller umfasst, der eine Anzahl von Kontaktflächen zur Führung der Fahrzeugtragfeder aufweist, wobei zumindest ab einer definierten Belastung der Feder ein kathodisches Korrosionsschutzelement mit der Feder in Wirkverbindung kommt. Das Korrosionsschutzelement ist in einer Aufnahme der Lagerung auswechselbar befestigt. Als Vorteil wird in der DE 10 2005 021 765 A1 herausgestellt, dass der kathodische Korrosionsschutz über die Lebensdauer des Fahrzeugs erhalten werden kann, weil das Korrosionsschutzelement ausgewechselt werden kann, wenn es verbraucht ist.

In der DE 10 2005 021 765 A1 werden verschiedene Möglichkeiten beschrieben, wie das Korrosionsschutzelement angeordnet werden kann. Nach einer ersten Ausführungsform kann es als bolzenartiger Körper ausgebildet sein, der in Kontakt mit einer ihm zugewandten Stirnfläche der Feder steht (Fig. 1 und 2). Nach einer zweiten Ausführungsform kann das Korrosionsschutzelement in einer Aufnahme einer Federunterlage angeordnet sein (Fig. 3 - 6). Nach einer dritten Ausführungsform ist das Korrosionsschutzelement als Schalenelement ausgebildet, das zumindest teilweise die Oberfläche der Fahrzeugtragfeder abdeckt (Fig. 8). Bei der ersten vorgenannten Ausführungsform können Beschädigungen der Lackbeschichtung der Feder im Berührungsbereich Feder/Federteller nicht sicher vermieden werden, bei der zweiten vorgenannten Ausführungsform ist ein zusätzliches Bauteil in Form einer Federunterlage zwingend erforderlich und bei der dritten vorgenannten Ausführungsform ist eine relativ großes schalenförmiges Korrosionsschutzelement notwendig, das auf die Endwindung der Feder aufgebracht werden muss, was aufwändig ist.

Auch in der EP 1 128 085 B1 ist eine Lösung beschrieben, bei der eine separate Federunterlage mit einem Sockelelement aus einem Elastomermaterial zwingend erforderlich ist. Außerdem ist zusätzlich eine als Opferanode ausgebildete Zwischenplatte aus Metall vorgesehen, die wenigstens bei einem stärkeren Einfedern mit einem Windungsabschnitt der Feder in Anlage kommt. Die Federunterlage und die mit Durchgriffsöffnungen für Vorsprünge des Sockelelementes versehene Zwischenplatte müssen gemeinsam vorgesehen sein und zusammen wirken, denn die Feder stützt sich auf den Vorsprüngen des Sockelelementes ab, welche die Zwischenplatte im Bereich der Durchgriffsöffnungen durchgreifen. Der Aufwand dieser Konstruktion ist erheblich.

Dokument DE102008046939, der die Präambel von Anspruch 1 offenbart, wird als das nächstliegende Dokument zum Stand der Technik angesehen.

Der Erfindung liegt die Aufgabe zu Grunde, einen Federteller zur Abstützung einer Fahrzeugtragfeder und mit einer Korrosionsschutzeinrichtung für die Feder zu schaffen, der konstruktiv einfach aufgebaut ist und bei dem für die Abstützung der Feder keine Federunterlage erforderlich ist.

Diese Aufgabe wird gelöst mit einem Federteller, der die Merkmale des Patentanspruchs 1 aufweist. Vorteilhafte Weiterbildungen sind in den Unteransprüchen angegeben.

Gemäß der Erfindung weist der Federteller zur Abstützung einer Fahrzeugtragfeder eine der Fahrzeugtragfeder zugewandte Oberfläche und mindestens einen Abstützpunkt auf, wobei der Federteller einen aus der Oberfläche in Richtung Fahrzeugtragfeder ausgestellten Bereich aufweist, der den Abstützpunkt bildet, und wobei an dem ausgestellten Bereich ein als Korrosionsschutzelement wirkendes Blechelement befestigt ist, das mit der Fahrzeugtragfeder bei allen Betriebszuständen in Kontakt steht. Durch den ausgestellten Bereich wird am Federteller ein konstruktiv klar definierter Abstützpunkt vorgesehen, an dem sich die Feder in allen Betriebszuständen, d.h. insbesondere in allen Einfederzuständen permanent abstützt. An diesem Abstützpunkt hat die Feder bei allen Betriebszuständen Kontakt zum Federteller, und erst die vom Federteller aus gesehen hinter dem Abstützpunkt liegenden Windungen der Feder bilden den federnden Bereich der Feder. Durch eine derartige Ausbildung des Federtellers können keine Schmutzpartikel zwischen die Feder und den Federteller dringen und die Lackschicht beschädigen.

Erfindungsgemäß wird der definierte Abstützpunkt gleichzeitig dazu genutzt, um an ihm ein Korrosionsschutzelement zu befestigen, das als Blechelement ausgebildet ist und das mit der Fahrzeugtragfeder bei allen Betriebszuständen in Kontakt steht. So kann auf einfache Weise realisiert werden, dass das Korrosionsschutzelement ständig in Kontakt mit der Feder steht und seine Korrosionsschutzfunktion ausüben kann.

Das als Korrosionsschutzelement dienende Blechelement kann aus Zink oder einer Zinklegierung bestehen. Nach der Erfindung ist das Blechelement mit dem ausgestellten Bereich verbunden werden, und es Schenkel aufweist, die zur Befestigung des Blechelementes um den ausgestellten Bereich herumgebogen werden. Auf diese Weise kann ein an dem ausgestellten Bereich befestigtes Korrosionsschutzelement im Bedarfsfall, z.B. bei entsprechender Abnutzung, gegen ein neues Korrosionsschutzelement ausgetauscht werden.

Als alternative Befestigungsmöglichkeiten kommen Nieten, Torxen oder Schrauben in Betracht, wobei zumindest bei Verwendung einer Schraubverbindung die Auswechselbarkeit des Blechelementes erhalten bleibt.

Die Erfahrung hat gezeigt, dass im Bereich des klar definierten Abstützpunktes eine Beschädigung der Lackschicht der Feder in der Praxis nicht ausgeschlossen werden kann. Vorteilhaft stellt die Erfindung in diesem Bereich des Abstützpunktes ein aus Zinkblech oder einer Zinklegierung bestehendes Korrosionsschutzelement zur Verfügung, das als Opferanode wirkt und einen Korrosionsangriff der Feder verhindert.

Hinsichtlich des Werkstoffes, aus dem der Federteller gebildet wird, sind mehrere Möglichkeiten denkbar. Zum einen kann der Federteller aus Kunststoff bestehen. Dann bietet es sich an, den Federteller durch Spitzgießen herzustellen und den ausgestellten Bereich einstückig mit dem Federteller auszubilden. Der Federteller mitsamt dem ausgestellten Bereich wird dann in einem Arbeitsschritt durch Spritzgießen hergestellt. Nach einer anderen Ausführungsform kann der Federteller auch aus Metall bestehen und durch ein Urformverfahren (z.B. Gießen) hergestellt sein. Bei dieser Ausführungsform ist der ausgestellte Bereich ebenfalls vorteilhaft einstückig mit dem Federteller ausgebildet und wird gemeinsam mit dem Federteller durch Gießen hergestellt. Nach einer weiteren Ausführungsform kann der aus Metall bestehende Federteller auch umformtechnisch durch das Umformen eines Blechrohlings hergestellt werden. In diesem Fall kann der ausgestellte Bereich durch Umformen des Federtellerrohlings oder durch Umformung des ansonsten schon fertig verformten Federtellers im Bereich des ausgestellten Bereiches hergestellt werden. Auch bei dieser Variante ist der ausgestellte Bereich einstückig mit dem Federteller ausgebildet.

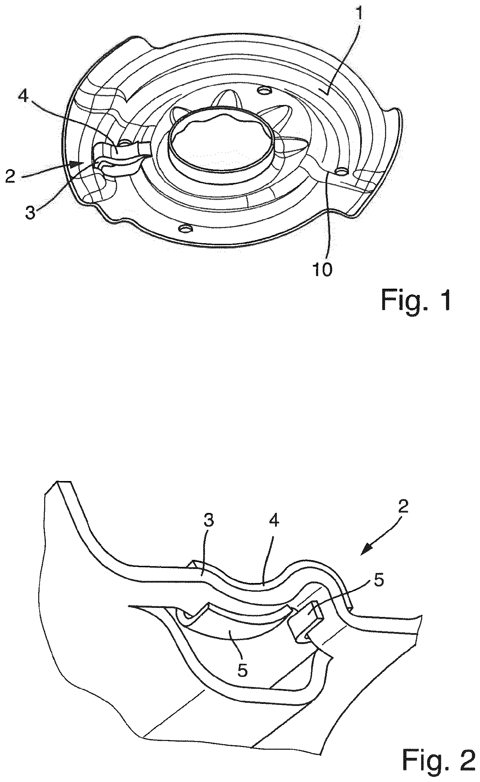

Im Folgenden wird die Erfindung anhand einer Zeichnung näher erläutert. Im Einzelnen zeigen
- Fig. 1: einen erfindungsgemäßen Federteller in perspektivischer Ansicht,
- Fig. 2: den durch einen ausgestellten Bereich des Federtellers gebildeten Abstützpunkt mit einem daran angebrachten Korrosionsschutzelement.

In Fig. 1 ist ein erfindungsgemäßer Federteller dargestellt, bei dem die der nicht dargestellten Fahrzeugtragfeder zugewandte Oberfläche 1 in einer perspektivischen Ansicht dargestellt ist. Die Oberfläche 1 weist einen Endanschlag 10 auf, an dem sich eine Stirnfläche der als Schraubendruckfeder ausgebildeten Fahrzeugtragfeder im Betrieb abstützt. Weiterhin ist ein aus dem Federtellermaterial ausgestellter Bereich 3 vorhanden, der einen definierten Abstützpunkt für die nicht dargestellte Fahrzeugtragfeder bildet. Im dargestellten Ausführungsbeispiel ist der Federteller durch Umformen aus einem blechförmigen Halbzeug hergestellt worden und auch der ausgestellte Bereich ist umformtechnisch erzeugt worden.

Der ausgestellte Bereich 3 ist brückenförmig ausgebildet und trägt ein als Korrosionsschutzelement wirkendes Blechelement 4. Dieses Blechelement 4 ist somit am Abstützpunkt 2 angeordnet und ist bei allen Betriebszuständen, d.h. insbesondere bei allen Einfederzuständen der Fahrzeugtragfeder mit der Feder in Kontakt. Auf diese Weise wirkt das Korrosionsschutzelement permanent und ohne Unterbrechung auf die Fahrzeugtragfeder ein.

Auf eine separate Federunterlage kann bei der erfindungsgemäßen Lösung vollständig verzichtet werden. Weiter ist vorteilhaft, dass das Korrosionsschutzelement auf einfache Weise und darüber hinaus auch lösbar und somit auswechselbar mit dem Federteller verbunden werden kann.

In Fig. 2 ist ein vergrößerter Ausschnitt des erfindungsgemäßen Federtellers dargestellt. Der dargestellte Ausschnitt zeigt vergrößert den ausgestellten Bereich 3 des Federtellers. Es ist gut zu erkennen, dass das als Korrosionsschutzelement wirkende Blechelement 4 Schenkel 5 aufweist, die zur Befestigung des Blechelementes 4 um den ausgestellten Bereich 3 des Federtellers herumgebogen sind. Durch diese Art der Befestigung kann das Blechelement 4 im Bedarfsfall von dem ausgestellten Bereich 3 des Federtellers wieder abgezogen und durch ein neues Blechelement 4 ersetzt werden. Durch den Austausch des Korrosionsschutzelementes kann somit ein dauerhafter Korrosionsschutz der Feder über die gesamte Fahrzeuglebensdauer gewährleistet werden.

### Bezugszeichenliste

- 1: Oberfläche
- 2: Abstützpunkt
- 3: Ausgestellter Bereich
- 4: Blechelement
- 5: Schenkel
- 10: Anschlagfläche

## Patentansprüche

1. Federteller zur Abstützung einer Fahrzeugtragfeder, mit einer der Fahrzeugtragfeder zugewandten Oberfläche (1) und mindestens einem Abstützpunkt (2), wobei der Federteller einen aus der Oberfläche (1) in Richtung Fahrzeugtragfeder ausgestellten Bereich (3) aufweist, der den Abstützpunkt (2) bildet, und wobei an dem ausgestellten Bereich (3) ein als Korrosionsschutzelement wirkendes Blechelement (4) befestigt ist, das mit der Fahrzeugtragfeder bei allen Betriebszuständen in Kontakt steht **dadurch gekennzeichnet, dass** das Blechelement (4) Schenkel (5) aufweist, die zur Befestigung des Blechelements (4) um den ausgestellten Bereich (3) herum gebogen sind.

2. Federteller nach Anspruch 1, **dadurch gekennzeichnet, dass** das Blechelement (4) aus Zink oder einer Zinklegierung besteht.

3. Federteller nach einem der voranstehenden Ansprüche, **dadurch gekennzeichnet, dass** er aus Kunststoff besteht.

4. Federteller nach Anspruch 3, **dadurch gekennzeichnet, dass** der ausgestellte Bereich (3) einstückig mit dem Federteller ausgebildet und der Federteller durch Spritzgießen hergestellt ist.

5. Federteller nach einem der Ansprüche 1 bis 2, **dadurch gekennzeichnet, dass** der Federteller aus Metall besteht.

6. Federteller nach Anspruch 5, **dadurch gekennzeichnet, dass** der ausgestellte Bereich (3) einstückig mit dem Federteller ausgebildet und der Federteller durch Gießen hergestellt ist.

7. Federteller nach Anspruch 5, **dadurch gekennzeichnet, dass** der ausgestellte Bereich (3) einstückig mit dem Federteller ausgebildet und durch Umformen des Federtellers hergestellt ist.

## Claims

1. A spring plate for supporting a vehicle suspension spring, with a surface (1) facing toward the vehicle suspension spring and with at least one support point (2), wherein the spring plate has a region (3) which extends from the surface (1) in the direction of the vehicle suspension spring and forms the support point (2), and wherein a sheet-metal element (4) acting as a corrosion protection element is fastened to the extended region (3) and is in contact with the vehicle suspension spring in all operating states **characterized in that** the sheet-metal element (4) has limbs (5) which are bent around the extended region (3) to fasten the sheet-metal element (4).

2. The spring plate as claimed in claim 1, **characterized in that** the sheet-metal element (4) consists of zinc or of a zinc alloy.

3. The spring plate as claimed in one of the preceding claims, **characterized in that** it consists of plastic.

4. The spring plate as claimed in claim 3, **characterized in that** the extended region (3) is formed in one piece with the spring plate and the spring plate is produced by injection molding.

5. The spring plate as claimed in one of claims 1 to 2, **characterized in that** the spring plate consists of metal.

6. The spring plate as claimed in claim 5, **characterized in that** the extended region (3) is formed in one piece with the spring plate and the spring plate is produced by casting.

7. The spring plate as claimed in claim 5, **characterized in that** the extended region (3) is formed in one piece with the spring plate and is produced by shaping the spring plate.

## Revendications

1. Coupelle de ressort pour supporter un ressort de support de véhicule, comprenant une surface (1) tournée vers le ressort de support de véhicule et au moins un point d'appui (2), la coupelle de ressort présentant une région (3) en relief depuis la surface (1) dans la direction du ressort de support de véhicule, laquelle forme le point d'appui (2), et un élément en tôle (4) agissant en tant qu'élément de protection contre la corrosion étant fixé à la région en relief (3), lequel est en contact avec le ressort de support de véhicule dans tous les états de fonctionnement, **caractérisée en ce que** l'élément en tôle (4) présente des branches (5) qui sont recourbées autour de la région en relief (3) pour fixer l'élément en tôle (4).

2. Coupelle de ressort selon la revendication 1, **caractérisée en ce que** l'élément en tôle (4) se compose de zinc ou d'un alliage de zinc.

3. Coupelle de ressort selon l'une quelconque des revendications précédentes, **caractérisée en ce qu'**elle se compose de plastique.

4. Coupelle de ressort selon la revendication 3, **caractérisée en ce que** la région en relief (3) est réalisée d'une seule pièce avec la coupelle de ressort et la coupelle de ressort est fabriquée par moulage par injection.

5. Coupelle de ressort selon l'une quelconque des revendications 1 et 2, **caractérisée en ce que** la coupelle de ressort se compose de métal.

6. Coupelle de ressort selon la revendication 5, **caractérisée en ce que** la région en relief (3) est réalisée d'une seule pièce avec la coupelle de ressort et la coupelle de ressort est fabriquée par moulage.

7. Coupelle de ressort selon la revendication 5, **caractérisée en ce que** la région en relief (3) est réalisée d'une seule pièce avec la coupelle de ressort et est fabriquée par déformation de la coupelle de ressort.
